# EUROPEAN PATENT APPLICATION

(11) **EP 2 495 963 A2**
(43) Date of publication of application: **05.09.2012**
(21) Application number: 11195985.4
(22) Date of filing: 29.12.2011
(51) Int. Cl.: H04N 5/46, H04N 9/64

(54) **Video display apparatus and video processing method**

(30) Priority: 01.03.2011 JP 2011044373
(71) Applicant: Kabushiki Kaisha Toshiba, Minato-ku Tokyo 105-8001 (JP)
(72) Inventor: Muto, Yasuhiko, Tokyo, 105-8001 (JP)
(74) Representative: Henkel, Breuer & Partner

(57) **Abstract**

One embodiment provides a video display apparatus, including: a converter configured to perform a format conversions; a video processor configured to perform a video processing, the video processor including a first super-resolution processor configured to perform at least one of self-congruence-type super-resolution processing and color super-resolution processing; and a controller configured: to judge whether an input video signal has the first format or not; to subject the input video signal to the video processing by the video processor while avoiding the converter, if judged that the input video signal does not have the first format; and to subject the input video signal to the format conversion by the converter, and then, to subject the converted input video signal to the video processing by the video processor, if judged that the input video signal has the first format.

## Description

### CROSS-REFERENCE TO RELATED APPLICATION(S)

This application claims priority from Japanese Patent Application No. 2011-044373 filed on March 1, 2011, the entire contents of which are incorporated herein by reference.

### FIELD

Embodiments described herein relate generally to a video display apparatus and a video processing method for processing a video signal.

### BACKGROUND

TV receivers which allow the user to enjoy a game by connecting a game machine to them are now in common use. The user connects a game machine to an external input terminal of a TV receiver and causes the game machine to operate, whereby video and audio generated by the game machine are output from the display and the speakers of the TV receiver. That is, the user can enjoy a game using a large screen by using a TV receiver as an external output device of a game machine.

Some TV receivers are compatible with various kinds of input video. For example, such TV receivers have D terminals (DI-D5 terminals), a component terminal, an S terminal, an RCA terminal, a composite video signal terminal, an HDMI (high-definition multimedia interface) terminal, etc. and receive input video through those terminals. Various formats of video signals may be input to the individual terminals, and such TV receivers may process video signals of 480i, 480p, 720p, 1,080i, 1,080p, etc.

Recent TV receivers may be provided with techniques capable of improving the image quality of input video by various kinds of super-resolution processing. For example, TV receivers having a reconstruction-based super-resolution processing function can realize video having a higher resolution than original video.

And, TV receivers which have a self-congruence-type super-resolution processing function capable of increasing resolutions in oblique directions and a color super-resolution processing function are developed.

However, it is more difficult to perform image quality enhancement processing on a video signal of the 4:4:4 format that is input via a D terminal (through which an output signal of a game machine or the like is to be input) than on a video signal of the 4:2:2 format. As a result, a video signal that is input via a D terminal is subjected to only simple scaling processing to likely produce zigzagged oblique lines (image quality degradation problem).

### BRIEF DESCRIPTION OF DRAWINGS

A general architecture that implements the various features of the present invention will now be described with reference to the drawings. The drawings and the associated descriptions are provided to illustrate embodiments and not to limit the scope of the present invention.
Fig. 1 illustrates a system configuration of a TV receiver according to an embodiment.
Fig. 2 illustrates a functional configuration of the TV receiver, in particular, a functional configuration of a pre-stage module 13 and a video processor thereof.
Fig. 3 illustrates a process that is executed by the TV receiver.
Fig. 4 illustrates a functional configuration of a TV receiver according to a modification of the embodiment.

### DETAILED DESCRIPTION

In general, one embodiment provides a video display apparatus, including: a converter configured to perform a format conversion in which a video signal having a first format is converted into a video signal having another format, the another format having the number of color sampling points smaller than that of the first format; a video processor configured to perform a video processing in which a video signal is processed to be output toward a display module, the video processor including a first super-resolution processor configured to perform at least one of self-congruence-type super-resolution processing and color super-resolution processing on the video signal having the another format; and a controller configured: to judge whether an input video signal has the first format or not; to subject the input video signal to the video processing by the video processor while avoiding the converter, if judged that the input video signal does not have the first format; and to subject the input video signal to the format conversion by the converter, and then, to subject the converted input video signal to the video processing by the video processor, if judged that the input video signal has the first format.

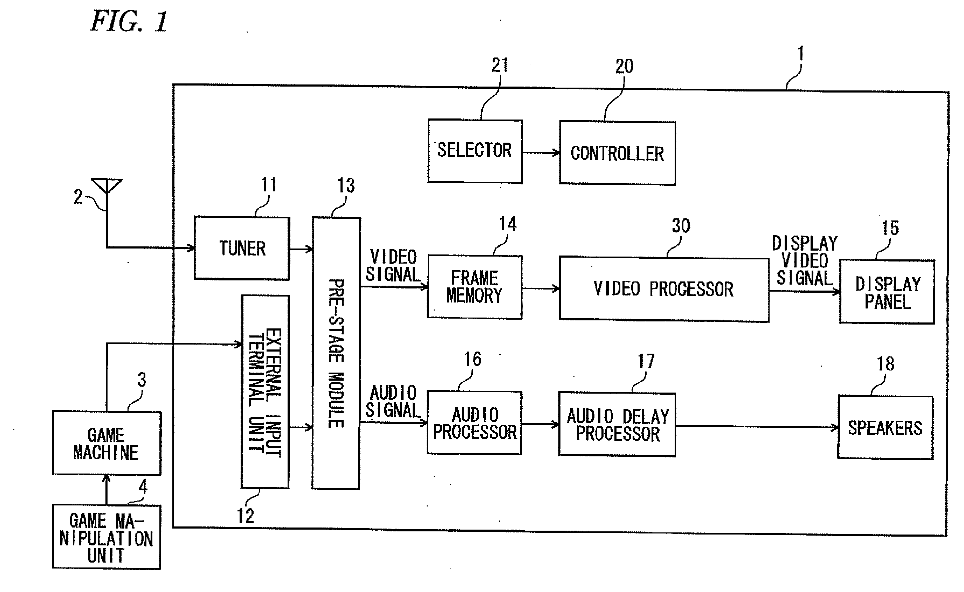

An embodiment will be hereinafter described in detail with reference to the drawings. Fig. 1 illustrates a system configuration of a TV receiver 1 (video display apparatus) according to the embodiment of the invention.

As shown in Fig. 1, the TV receiver I is equipped with a tuner 11, an external input terminal unit 12, a pre-stage module 13, a frame memory 14, a video processor 30, a selector 21, a controller 20, an audio processor 16, and an audio delay processor 17. Although the frame memory 14 and the video processor 30 are separated from each other for convenience of description, the frame memory 14 may be regarded as part of the video processor 30 and the frame memory 14, the video processor 30, etc. may be implemented as a single system LSI.

An antenna 2 is connected to the tuner 11. A game machine 3 having a game manipulation unit 4 is connected to the external input terminal unit 12, and a video signal and an audio signal are output to a display panel 15 (display module) and speakers 18 (audio output modules), respectively.

The tuner 11 tunes in to and processes a broadcast signal or the like of a satellite broadcast such as a BS broadcast or a CS broadcast, a ground-wave broadcast, or the like and outputs a video signal and an audio signal. The tuner 11 can also receive a signal that is transmitted by a communication line such as a cable TV line.

The external input terminal unit 12 has a D terminal (D1-D5 terminals), a component terminal, an S terminal, an RCA terminal, a composite video signal terminal, an HDMI (high-definition multimedia interface) terminal, etc. As such, the external input terminal unit 12 receives a video signal and an audio signal as external input signals from an external apparatus such as the game machine 3 or a hard disk recorder in the form of a composite signal, an S terminal signal, color difference signals, a D-sub signal, or the like.

The TV receiver 1 accommodates various video formats such as 480i, 480p, 720p, 1,080i, and 1,080p. Furthermore, the TV receiver 1 accommodates various chroma formats for narrowing the bandwidth of color signals and can process video signals of the 4:4:4 format (no decimation), the 4:2:2 format (the sampling points of color difference signals are decimated to 1/2 of those of a luminance signal), the 4:2:0 format and the 4:1:1 format (the sampling points of color difference signals are decimated to 1/4 of those of a luminance signal), etc.

The pre-stage module 13 receives plural sets of a video signal and an audio signal from the tuner 11 and the external input terminal unit 12 and performs pre-sage processing on a selected video signal and audio signal. As described later, the pre-stage module 13 has an A/D converting function of converting an analog video signal into a digital video signal and a chroma format converting function. The pre-stage module 13 outputs a pre-stage-processed video signal and audio signal to the frame memory 14 and the audio processor 16, respectively.

The video signal is supplied via the frame memory 14 to the video processor 30 (described later in detail), where it is subjected to signal processing. A resulting video display signal is output to the display panel 15. The audio signal is subjected to signal processing in the audio processor 16. A resulting signal is delayed by the audio delay processor 17 according to a delay time of the video signal, and output to the speakers 18.

The controller 20 is a CPU which controls the entire TV receiver 1 according to, for example, the setting of the selector 21 which receives a user instruction. The controller 20 controls the pre-stage module 13 and the video processor 30 according to the format of an input video signal so that the video signal is subjected to video processing that is most suitable for its format If the pre-stage module 13 is to select, for example, a video signal of the 4:4:4 format that is output from the D terminal of the external input terminal unit 12, the controller 20 causes the pre-stage module 13 to convert the video signal of the 4:4:4 format into a video signal of the 4:2:2, for example, and output the latter. In this case, the controller 20 controls the video processor 30 so that the chroma-format-converted video signal is subjected to super-resolution processing of both of a 4:2:2 super-resolution module and a 4:4:4 super-resolution module.

The selector 21 determines, according to a user manipulation, which of a video signal supplied from the tuner 11 and a video signal supplied from the external input terminal unit 12 should be selected, and gives the controller 20 an instruction to that effect.

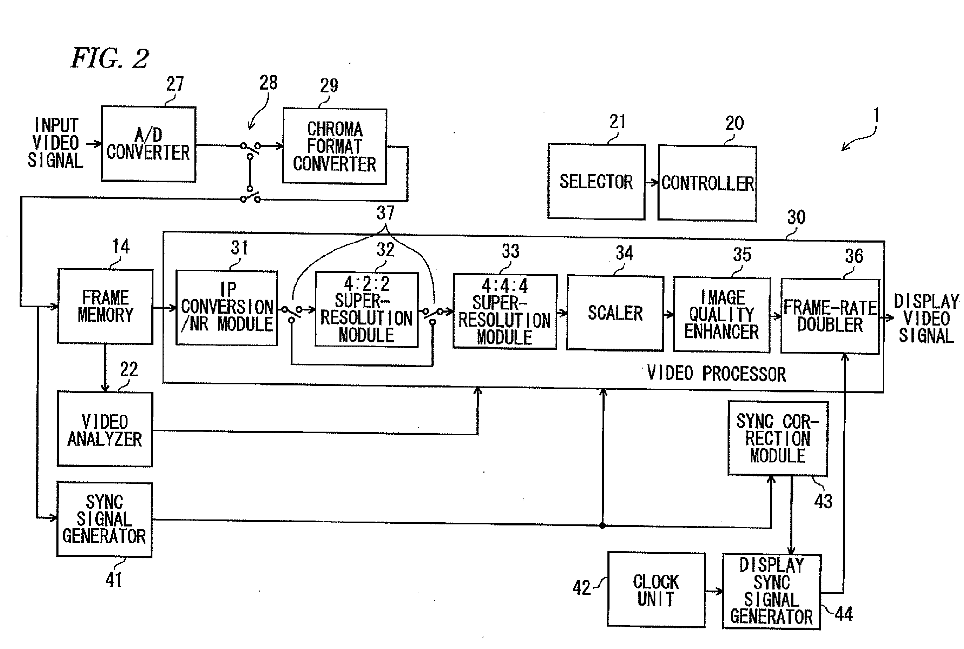

Fig. 2 is a block diagram showing a specific configuration corresponding to Fig. 1, in particular, specific configurations of the pre-stage module 13 and the video processor 30.

The pre-stage module 13 of the TV receiver 1 according to the embodiment is composed of an A/D converter 27, selectors 28, and a chroma format converter 29. The A/D converter 27 converts an input video signal into a digital signal and outputs the latter. The A/D converter 27 can convert an input video signal into a digital signal through oversampling.

The selectors 28, which are controlled by the controller 20, are configured so as to supplies the output signal of the A/D converter 27 to the chroma format converter 29 if it is a video signal of the 4:4:4 format and has a relatively low resolution (480i, 480p, 720p, or the like) and directly to the frame memory 14 if it is a video signal of any of the other formats. The selectors 28 may be configured so that only a video signal of the 4:4:4 format that is supplied via the D terminal among various kinds of output signals of the A/D converter 27 is supplied to the chroma format converter 29.

The chroma format converter 29 converts the received video signal of the 4:4:4 format into a video signal of a chroma format that is smaller in the number of color sampling points than the 4:4:4 format, such as the 4:2:2 format, the 4:2:0 format, or the 4:1:1 format, and outputs the latter to the frame memory 14.. The chroma format converter 29 may be configured so as to convert a video signal of the 4:4:4 format that is supplied via the D terminal into a video signal of the 4:2:2 format.

The pre-stage module 13 converts at least a video signal of the 4:4:4 format that is supplied via the D terminal into a video signal of the 4:2:2 format, and supplies the latter to the frame memory 14.

The resolution of color signal components is lowered when a video signal of the 4:4:4 format is converted into a video signal of the 4:2:2 format. However, since the A/D converter 27 performs A/D conversion through oversampling, image quality degradation due to resolution reduction caused by the chroma format conversion is slight.

As shown in Fig. 2, the TV receiver 1 is equipped with the frame memory 14, the video processor 30, a video analyzer 22, a sync signal generator 41, a clock unit 42, a sync correction module 43, and a display sync signal generator 44.

The video processor 30 is composed of an IP conversion/NR module 31, a 4:2:2 super-resolution module 32, a 4:4:4 super-resolution module 33, a scaler 34, an image quality enhancer 35, and a frame-rate-doubling processor 36.

The video analyzer 22 analyzes a video signal that is stored in the frame memory 14 and outputs frame information to be used by the controller 20 in controlling the video processor 30. For example, the video analyzer 22 acquires luminance histogram data of one frame by dividing a luminance level dynamic range into n parts and counting the numbers of pixels, corresponding to respective luminance levels 1-n, of a video signal of one frame. Furthermore, the video analyzer 22 detects, for example, a frequency distribution of a video signal.

The sync signal generator 41 generates sync signals by separating them from an input video signal. The clock unit 42 generates a signal having a predetermined frequency, and the display sync signal generator 44 generates sync signals (display sync signals) for a display video signal to be displayed by the display panel 15 based on the signal generated by the clock unit 42.

The sync correction module 43 synchronizes the input sync signals generated by the sync signal generator 41 and the display sync signals generated by the display sync signal generator 44 with each other. Where a flat panel display (hereinafter referred to as FPD) is employed as the display panel 15, horizontal and vertical sync signals (hereinafter referred to as display sync signals) for display of the FPD are generated asynchronously with horizontal and vertical sync signals (hereinafter referred to as input sync signals) of an input video signal. The frequencies of the display sync signals of the FPD have allowable ranges, and the FPD can always perform display based on an input video signal as long as the frequencies of input sync signals are within the allowable ranges (corresponding periods will be hereinafter referred to as sync compensation periods).

However, where display sync signals are not synchronized with input sync signals, a display memory may overflow or underflow because of the differences between the frequencies of the display sync signals and those of the input sync signals. For this reason, the sync correction module 43 synchronizes display sync signals with input sync signals. The sync correction module 43 generates display sync signals that are synchronized with input sync signals that are in predetermined sync compensation periods, and outputs the generated display sync signals to the display panel 15.

The IP (interface/progressive) conversion/NR (noise reduction) module 31 of the video processor 30 performs IP conversion processing of converting an interlaced video signal into a progressive video signal and noise reduction processing of reducing roughness, a flicker, blocking noise, and mosquito noise of video. That is, the IP conversion/NR module 31 is composed of an IP conversion module and an NR module. No IP conversion processing is performed on a progressive input video signal. Noise reduction processing may be omitted an input video signal contains only little noise. That is, the IP conversion/NR module 31 performs at least one of IP conversion processing and noise reduction processing.

The 4:2:2 super-resolution module 32 is equipped with a self-congruence-type super-resolution processor and a color super-resolution processor. The self-congruence-type super-resolution processor generates a signal between existing pixels using a signal that is located in the vicinity of an edge and is similar to it utilizing a property (self-congruence) that an image similar to a certain image exists in the frame. That is, the self-congruence-type super-resolution processor processes an edge portion such as a boundary between objects, a line, or the like, detects a portion that similar in a video signal to the edge portion from a peripheral portion of the edge portion, and generates a higher resolution image by superimposing resulting images on each other. The processing of the self-congruence-type super-resolution processor increases the resolution of an image and thereby increases the sharpness of video further.

The color super-resolution processor performs such self-congruence-type super-resolution processing on color signals and thereby doubles the color resolution. The color super-resolution processor can thus increase the color sharpness and fineness of an image.

In digital broadcast, a video signal of the 4:2:0 format may be used in which color sampling points are decimated to 1/2 points in each of the horizontal and vertical directions. Performing color super-resolution processing on such a video signal makes it possible to restore color information that was partially lost due to the compression to I12 of brightness information and to thereby reproduce highly colorful video. That is, the color super-resolution processor can increase the color information amount to fine details, thereby suppress blurring in edge portions and increase sharpness, and consequently increase the fineness of the entire image.

To perform color super-resolution processing, the color super-resolution processor performs congruent points search processing and phase focusing processing. The color super-resolution processor detects a pixel that is self-congruent with an input pixel by congruent points search processing and uses it as a new sampling point. However, in the 4:2:0 format, a phase offset occurs that the pixel positions of color different signals are shifted in the vertical direction from those of a luminance signal. The color super-resolution processor performs phase focusing processing to correct the phase of color signals according to that of a luminance signal.

The 4:2:2 super-resolution module 32 cannot perform signal processing on a video signal of the 4:4:4 format. However, as for a video signal of the 4:4:4 format, a sufficiently high resolution can be obtained without color super resolution processing because color signals were not subjected to decimation processing.

Processing that is performed by the 4:2:2 super-resolution module 32 is associated with vertical pixel interpolation, and basically the 4:2:2 super-resolution module 32 cannot process a video signal whose number of pixels is larger than 1/2 of the number of pixels in the vertical direction of the display panel 15. However, the 4:2:2 super-resolution module 32 may be configured so as to perform self-congruence-type super-resolution processing and color super-resolution processing on a video signal whose number of pixels is larger than 1/2 of the number of pixels in the vertical direction of the display panel 15 with an assumption that pixel compression processing or decimation processing is performer. For example, where the display panel 15 has an HD resolution, the 4:2:2 super-resolution module 32 may be configured so as to perform super-resolution processing on not only 480i and 480p video signals but also a 720p video signal of the 4:2:2 format.

As described above, the 4:2:2 super-resolution module 32 cannot perform super-resolution processing on all kinds of video signals because of limitations relating to the number of pixels in the vertical direction and the chroma format. For example, where a 480p video signal that is input to the D terminal has the 4:4:4 format, the 4:2:2 super-resolution module 32 cannot perform super-resolution processing on this video signal. However, even a 480p video signal of the 4:4:4 format which is input to the D terminal is not sufficiently high in resolution and it is desired that such a video signal be increased in resolution by super-resolution processing.

In view of the above, in the embodiment, for example, a 480p video signal of the 4:4:4 format which is input to the D terminal is converted into a video signal of the 4:2:2 format, which is supplied to the 4:2:2 super-resolution module 32. This video signal is increased in resolution by self-congruence-type super-resolution processing and color super-resolution processing.

If a video signal that is output from the IP conversion/NR module 31 has such a resolution as to be processable by the 4:2:2 super-resolution module 32 and is of a chroma format that has a smaller number of color sampling points than the 4:4:4 format, selectors 37 supply this video signal to the 4:4:4 super-resolution module 33 via the 4:2:2 super-resolution module 32. The selectors 37 supply any of the other kinds of video signals directly to the 4:4:4 super-resolution module 33, that is, without causing them to be processed by the 4:2:2 super-resolution module 32.

For example, if receiving a video signal of 480i, 480p, or 720p having the 4:2:2 format from the IP convexsionlNl2, module 31, the selectors 37 supply it to the 4:2:2 super-resolution module 32. A video signal of the 4:4:4 format which is input via the D terminal is converted into a video signal of the 4:2:2 format, which is supplied to the 4:2:2 super-resolution module 32 and subjected to self-congruence-type super-resolution processing and color super-resolution processing there.

The 4:2:2 super-resolution module 32 may have a plural frames super-resolution processor which performs super-resolution processing for each set of frames.

The 4:4:4 super-resolution module 33, which is to perform reconstruction-based super-resolution processing, generates video having a higher resolution than original video by creating high frequency components and sharpening the video by generating new pixel data between pixels. That is, the 4:4:4 super-resolution module 33 restores a video signal having a high resolution (second resolution) by increasing pixels by estimating intrinsic pixel values from a video signal having a low resolution (first resolution). The term "intrinsic pixel values" means, for example, values of pixels of a video signal that would be obtained when a subject that was shot to obtain a video signal having a low resolution (first resolution) is shot with a camera having a high resolution (second resolution). The term "to increase pixels through estimation" means estimating intrinsic pixel values by detecting a feature of a subject image and using a high-correlation image in the same or another frame, and employing them as pixel values of new pixels (correlation between images is utilized). The 4:4:4 super-resolution module 33 uses a known technique such as a technique of restoring video having high frequency components whose frequencies are higher than a Nyquist frequency that is determined by a sampling frequency of input video.

The scaler 34 performs scaling processing of adjusting the specifications of a video signal to those of the display panel 15 when the former are currently different from the latter. For example, when the aspect ratio of an input video signal is 4:3 and that of the display panel IS is 16:9, the scaler 34 converts the input video signal into a display video signal having an aspect ratio 16:9.

To improve the image quality of video, the image quality enhancer 35 performs image quality enhancement processing such as color correction (gamma correction, white balance adjustment, brightness adjustment, and contrast adjustment), sharpness adjustment, edge enhancement, and response speed raising.

The frame-rate-doubling processor 36 performs doubling processing of doubling the frame rate (50 Hz to 100 Hz, 60 Hz to 120 Hz) and thereby reducing the degree of afterimage. The frame-rate-doubling processing may be either of a method in which an interpolation frame to be inserted between two consecutive frames is generated by motion compensation prediction or a simple double repeat method in which the same image is simply displayed two times.

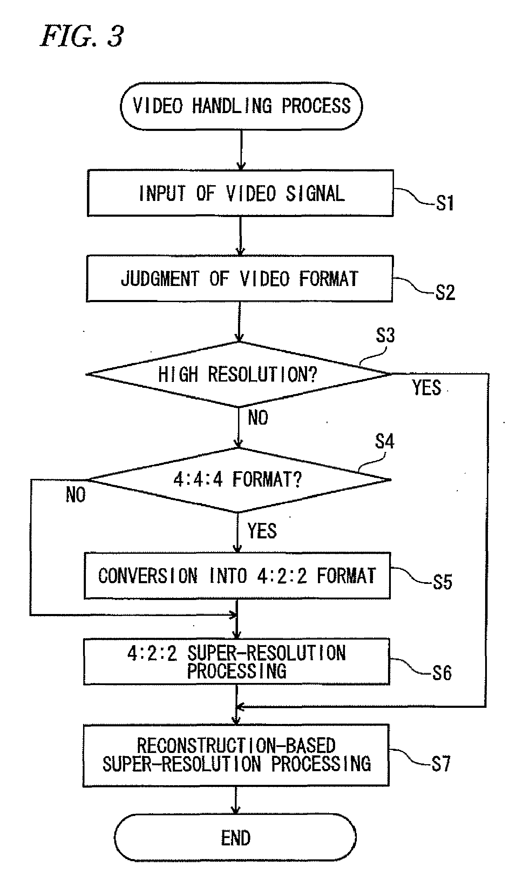

Next, a process that is executed by the above-configured TV receiver 1 according to the embodiment will be described with reference to Fig. 3.

At step S1, a video signal inducted in the antenna 2 is selected by the tuner 11 through tuning and supplied to the pre-stage module 13. On the other hand, a video signal supplied from the game machine 3 is supplied to the pre-stage module 13 via the external input terminal unit 12. Now assume that a high-resolution video signal (e.g., 1,080p video signal of the 4:4:4 format) supplied from the tuner 11 is selected by a selection manipulation of the user. If the input video signal is an analog signal, the A/D converter 27 of the pre-stage module 13 converts it into a digital signal.

At step S2, the controller 20 detects that the video format of the selected video signal is the 4:4:4 format and is high in resolution (S3: yes) and supplies it to the frame memory 14 and stores it therein by controlling the selectors 28 of the pre-stage module 13. The video processor 30 reads the video signal from the frame memory 14 and processes it in its individual modules.

The controller 20 supplies an output signal of the IP conversion/NR module 31 to the 4:4:4 super-resolution module 33 by controlling the selectors 37. As a result, the video signal that has been read from the frame memory 14 is subjected to NR processing in the IP conversion/NR module 31 and then subjected to reconstruction-based super-resolution processing (step S7) and thereby increased in resolution. An output video signal of the 4:4:4 super-resolution module 33 is subjected to respective pieces of processing in the scaler 34, the image quality enhancer 35, and the frame-rate doubler 36, and a resulting display video signal is supplied to the display panel 15.

As a result, video obtained through the super-resolution processing and the image quality enhancement is displayed on the display screen of the display panel 15.

Next, assume that a video signal of the 4:4:4 format that is input from the game machine 3 via the D terminal is selected by the user. The A/D converter 27 of the pre-stage module 13 converts a 480p analog video signal which is input via the D terminal into a digital signal.

At step S2, the controller 20 detects that the video format of the selected video signal is the 4:4:4 format is relatively low in resolution (S3: no; S4: yes), the process moves to step S5. More specifically, the controller 20 supplies the video signal to the chroma format converter 29 by controlling the selectors 28 of the pre-stage module 13. The chroma format converter 29 converts the video format of the received video signal to, for example, the 4:2:2 format by decreasing the number of sampling points of the color signals. A chroma-format-converted video signal is supplied to the frame memory 14 and stored therein.

The video processor 30 reads the video signal from the frame memory 14 and processes it in its individual modules. The controller 20 supplies an output signal of the IP conversion/NR module 31 to the 4:2:2 super-resolution module 32 by controlling the selectors 37.

In the 4:2:2 super-resolution module 32, the video signal is subjected to subjected to self-congruence-type super-resolution processing and color super-resolution processing and thereby increased in resolution (step S6), whereby the luminance signal and the color signals are increased in resolution in oblique directions. As a result, the video signal having the relatively low resolution which has been input via the D terminal is increased in resolution. An output video signal of the 4:2:2 super-resolution module 32 is supplied to the 4:4:4 super-resolution module 33 and subjected to reconstruction-based super-resolution processing there (step S7). An output video signal of the 4:4:4 super-resolution module 33 is subjected to respective pieces of processing in the scaler 34, the image quality enhancer 35, and the frame-rate doubler 36, and a resulting display video signal is supplied to the display panel 15.

As a result, even in the case where a video signal having a relatively low resolution is input via the D terminal, high-image-quality video that has been increased sufficiently in resolution by not only reconstruction-based super-resolution processing but also self-congruence-type super-resolution processing and color super-resolution processing is displayed on the display screen of the display panel 15.

As described above, a video signal of the 4:4:4 format having a relatively low resolution is converted into a video signal of the 4:2:2 format, which is subjected to super-resolution processing etc. Although the number of color sampling points is decreased by the conversion into the 4:2:2 format, image quality degradation due to the decrease in the number of sampling points is slight because of oversampling of A/D conversion. On the other hand, since the video signal is subjected to self-congruence-type super-resolution processing and color super-resolution processing by virtue of the conversion into the 4:2:2 format, the resolution can be increased sufficiently and the image quality can be increased greatly. As a result, for example, a video signal of the 4:4:4 format that is input from the game machine 3 or the like via the D terminal can be increased or enhanced sufficiently in resolution and image quality.

### (Modification)

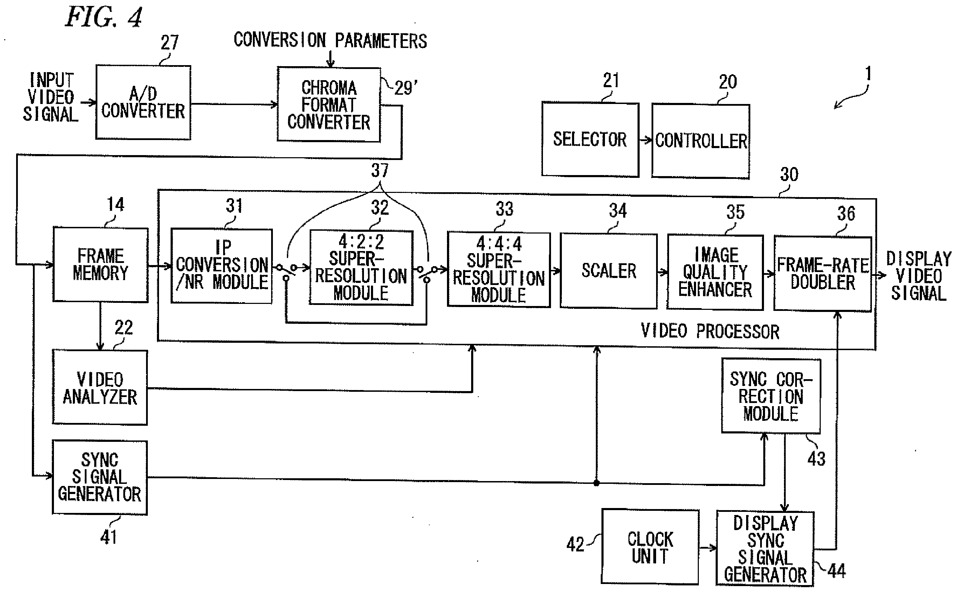

Fig. 4 illustrates a functional configuration of a TV receiver 1' according to a modification of the embodiment. Modules, sections, etc. in Fig. 4 having the same ones in Fig. 2 will be given the same reference numerals and will not be described in detail.

This modification is different from the embodiment in that a chroma format converter 29' is provided in place of the chroma format converter 29. The chroma format converter 29' perform chroma format conversion according to conversion parameters which are supplied from the controller 20. If an input video signal is of the 4:4:4 format and has a relatively low resolution (e.g., 480i, 480p, or 720p), the controller 20 gives the chroma format converter 29' conversion parameters for converting the input video signal into a video signal of a chroma format (e.g., 4,2:2, 4:2:0, or 4:1:1) in which the number of color sampling points is smaller than in the 4:4:4 format. If an input video signal is of any of the other kinds, the controller 20 gives the chroma format converter 29' conversion parameters for causing the chroma format converter 29' to output the received video signal as it is, that is, without performing any chroma format conversion on it.

With the above configuration, the chroma format converter 29' converts a video signal of the 4:4:4 format having a relatively low resolution into a video signal of a chroma format (e.g., 4:2:2, 4:2:0, or 4:1:1) that has a smaller number of color sampling points than the 4:4:4 format and outputs the latter to the frame memory 14.

The other part of the configuration, the other workings, and the advantages are the same as in the embodiment.

Although the embodiment of the invention has been described above, the embodiment is just an example and should not be construed as restricting the scope of the invention. The embodiment may be practiced in other various forms, and part of it may be omitted, replaced by other elements, or changed in various manners without departing from the spirit and scope of the invention. These modifications are also included in the invention as claimed and its equivalents.

## Claims

1. A video display apparatus, comprising:
a converter configured to perform a format conversion in which a video signal having a first format is converted into a video signal having another format, the another format having the number of color sampling points smaller than that of the first format;
a video processor configured to perform a video processing in which a video signal is processed to be output toward a display module, the video processor including a first super-resolution processor configured to perform at least one of self-congruence-type super-resolution processing and color super-resolution processing on the video signal having the another format; and
a controller configured:
to judge whether an input video signal has the first format or not;
to subject the input video signal to the video processing by the video processor while avoiding the converter, if judged that the input video signal does not have the first format; and
to subject the input video signal to the format conversion by the converter, and then, to subject the converted input video signal to the video processing by the video processor, if judged that the input video signal has the first format.

2. The apparatus of Claim 1,
wherein the controller subjects the input video signal to the format conversion, and then, subjects the video processing, if the input video signal is judged to be a video signal of 480i, 480p, or 720p having a 4:4:4 format.

3. The apparatus of Claim 1,
wherein the controller subjects the input video signal to the format conversion, and then, subjects the video processing, if the input video signal is judged to be a video signal having a 4:4:4 format that is input via a D terminal.

4. The apparatus of Claim 1,
wherein the video processor further includes a second super-resolution processor configured to perform reconstruction-based super-resolution processor.

5. The apparatus of Claim 1, further comprising:
an And converter configured to performs an oversampling to convert the input video signal into a digital signal, and to supply the digital signal to the converter if the input video signal has a 4:4:4 format.

6. A video processing method, comprising:
judging with a controller whether or not an input video signal has a first format;
if judged that the input video signal does not have the first format,
performing a first video processing with a video processor on the input video signal; and
if judged that the input vide signal has the first format,
converting the input video signal with a converter into a video signal having another format, the another format having the number of color sampling points smaller than that of the first format, and then,
performing a second video processing with the video processor on the converted video signal, the second video processing including at least one of self-congruence-type super-resolution processing and color super-resolution processing.

7. The method of Claim 6,
wherein, if the input video signal is judged to be a video signal having a 4:4:4 format that is input via a D terminal, the input video signal is converted, and the second video processing is performed on the converted video signal.
